# EUROPÄISCHE PATENTSCHRIFT

(11) **EP 0 638 699 B1**
(45) Veröffentlichungstag und Bekanntmachung des Hinweises auf die Patenterteilung: **05.02.1997**
(21) Anmeldenummer: 94109263.7
(22) Anmeldetag: 16.06.1994
(51) Int. Cl.: E04F 13/08, F16B 13/08

(54) **Doppelverbinder, insbesondere zur Leibungsverbindung zweier Platten**
Double connector, especially for fillet-connection of two panels
Connecteur double, notamment pour connexion par embrasure de deux panneaux

(30) Priorität: 14.08.1993 DE 9312195 U
(43) Veröffentlichungstag der Anmeldung: 15.02.1995
(73) Patentinhaber: fischerwerke Artur Fischer GmbH & Co. KG, D-72178 Waldachtal (DE)
(72) Erfinder: Lind, Stefan, Dipl.-Ing., D-72178 Waldachtal (DE)

(56) Entgegenhaltungen:
- EP-A- 0 440 896
- DE-A- 1 625 393
- DE-A- 1 924 006
- DE-A- 3 938 756
- DE-U- 9 115 959
- FR-A- 2 068 066
- FR-A- 2 472 103
- FR-A- 2 666 125

## Beschreibung

Die Erfindung betrifft einen Doppelverbinder, insbesondere zur Leibungsverbindung zweier Platten aus Stein, Marmor oder dgl., gemäß der Gattung des Anspruches 1.

Aus der DE-PS 1 625 393 ist eine Steckverbindung für Platten bekannt, die aus zwei miteinander verrastbaren und in miteinander fluchtenden Bohrungen der zu verbindenden Platten festsetzbaren Verbindungselementen besteht. Die Festsetzung der Verbindungselemente erfolgt über Befestigungszapfen, deren Mantelfläche mit einem Sägezahnprofil versehen ist. Der Befestigungszapfen wird in das Bohrloch der Platte eingedrückt und hält in der Platte aufgrund des Reibschlusses zwischen dem Befestigungszapfen und der Bohrlochwandung.

Eine solche Verbindung zweier Stein- bzw. Marmorplatten ist zumindest im Fassadenbau nicht mehr ausreichend. Aus Sicherheitsgründen werden im Fassadenbau vorwiegend aus Stahl bestehende Befestigungselemente eingesetzt, die durch Formschluß und/oder Spreizung in den Platten verankert sind.

Der Erfindung liegt die Aufgabe zugrunde, einen Doppelverbinder zur Verbindung zweier Platten aus Stein, Marmor oder dgl. zu schaffen, der eine hohe Zug- und Druckkraftaufnahme ermöglicht.

Die Lösung dieser Aufgabe wird durch die im Anspruch 1 angegebenen Merkmale erreicht. Zur Herstellung der Verbindung wird ein Zapfenteil des Verbindungsstückes mit dem diesem Zapfenteil zugeordneten Verankerungselement in dem vorzugsweise hinterschnittenen Bohrloch einer Platte verankert. Die Verankerung erfolgt durch Aufdrücken eines Spreizelementes auf den Konus eines Bolzens, wobei sich das Spreizelement in der Hinterschneidung des Bohrloches verspannt. Auf das überstehende andere Zapfenteil, auf das der Konusbolzen mit dem Spreizelement lose aufgesteckt ist, wird nunmehr die zweite Platte, die ebenfalls ein entsprechendes Bohrloch aufweist, aufgedrückt. Sobald der Konusbolzen mit seiner Stirnseite am Bohrlochgrund der zweiten Platte aufsitzt, wird der mit einem Bund versehene Bolzenschaft in das Zapfenteil eingeschoben und gleichzeitig das Spreizelement zwischen der Stirnseite des Zapfenteiles und dem Spreizkonus verspannt. Mit dem Einrasten des am Bolzen angeordneten Bundes in die Hinterschneidung des Zapfenteiles ist sowohl die Verankerung des Zapfenteiles in der zweiten Platte als auch die Verbindung der beiden Platten erreicht. Durch die Verankerung des Doppelverbinders mittels Spreizelemente in den beiden Platten und aufgrund der Rastverbindung zwischen den Konusbolzen und den Zapfenteilen ergibt sich eine stabile und hochfeste Verbindung beider Platten.

Das bevorzugt als wellenförmig gebogener Ring ausgebildete Spreizelement läßt sich ohne großen Kraftaufwand in der Hinterschneidung des Bohrloches verspannen. Es treten somit keine oder nur geringe Spreizdruckkräfte auf, die eine schonende, aufgrund des Formschlusses jedoch hohe Haltekräfte bewirkende Verankerung ermöglichen.

Soll zwischen den beiden miteinander zu verbindenden Platten eine Sichtfuge verbleiben, kann zwischen den beiden Zapfenteilen des Verbindungsstückes ein Anschlagbund angeordnet werden. Das zuerst zu verankernde Zapfenteil kann ggf. auch dadurch im Bohrloch der einen Platte verankert werden, daß das Zapfenteil mit einem Innengewinde versehen ist, das auf ein entsprechendes Außengewinde des Konusbolzens aufschraubbar ist. In diesem Fall ist es zweckmäßig, den Außendurchmesser des Zapfenteiles dem Bohrlochdurchmesser anzupassen und den Anschlagbund zum Ansetzen eines Schraubenschlüssels mit einem Mehrkant zu versehen.

In der Zeichnung sind Ausführungsbeispiele der Erfindung dargestellt.

Es zeigen:
- Figur 1: den in einer Platte bereits verankerten Doppelverbinder und
- Figur 2: einen Doppelverbinder mit zwei unterschiedlichen Verankerungselementen.

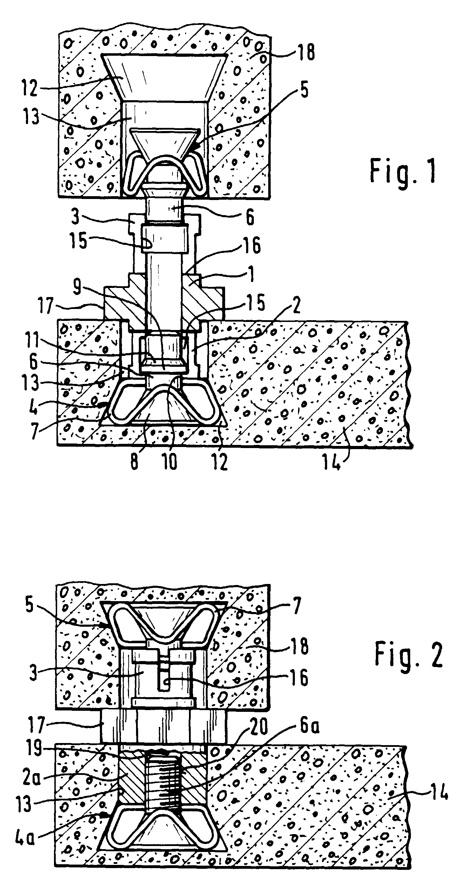

Der in Figur 1 dargestellte Doppelverbinder besteht aus dem hülsenförmigen Verbindungsstück 1 mit den beiden Zapfenteilen 2, 3 und den beiden gleich ausgebildeten Verankerungselementen 4, 5. Das Verankerungselement wird durch einen Konusbolzen 6 und dem Spreizelement 7 gebildet, das die Form eines wellenförmig gebogenen Ringes besitzt.

Der Konusbolzen 6 ist mit einem Spreizkonus 8 und im Abstand zum Spreizkonus mit einem umlaufenden Bund 9 versehen, der zum leichteren Einschieben in die Innenbohrung 10 des Zapfenteiles eine Auflauffase 11 aufweist. Mit dem Einschieben des Konusbolzens 6 in die Bohrung 10 des Zapfenteiles wird das Spreizelement 7 in der Hinterschneidung 12 des Bohrloches 13 der Platte 14 verspannt, so daß der Konusbolzen in der Platte 14 verankert ist. Gleichzeitig rastet der Bund 9 in die Hinterschneidung 15 des Zapfenteiles 2 ein und bildet eine zugfeste Verbindung zwischen dem Verankerungselement 4 und dem Zapfenteil 2. Zum Auffedern sind die beiden Zapfenteile 2, 3 mit mehreren, von deren Stirnseite ausgehenden Schlitzen 16 versehen.

Nach dem Festsetzen des Verankerungselementes 4 in der Platte 14 sitzt der Anschlagbund 17 auf der Außenfläche der Platte 14 auf. Zur Verbindung der Platte 18 mit der Platte 14 wird die Platte 18 auf das Verankerungselement 5 aufgeschoben. Die Platte 18 weist ein dem Bohrloch 13 der Platte 14 identisches Bohrloch auf. Mit dem Aufschieben der Platte 18 wird auch der Konusbolzen 6 in das Zapfenteil 3 eingeschoben und dabei das Verankerungselement 5 im Bohrloch 13 der Platte 18 verankert.

Wie aus Figur 2 ersichtlich, sitzt die Platte 18 nach der Verankerung auf dem Anschlagbund 17 auf. In Figur 2 ist das Zapfenteil 2a mit einem Innengewinde 19 versehen. Die Festsetzung des Verankerungselementes 4a erfolgt bei diesem Ausführungsbeispiel durch Aufdrehen des Zapfenteiles 2a auf den Konusbolzen 6a, der zu diesem Zweck ein einsprechendes Außengewinde 20 aufweist. Das Aufschrauben des Zapfenteiles 2a erfolgt vor der Festsetzung der Platte 18 auf dem gegenüberliegenden Verankerungselement 5. Bei dieser Ausführung kann das Zapfenteil 2a einen dem Bohrloch 13 entsprechenden Außendurchmesser aufweisen. Zum Ansetzen eines Schraubenschlüssels ist bei dieser Ausführungsvariante der Anschlagbund 17 als Mehrkant ausgebildet.

## Patentansprüche

1. Doppelverbinder, insbesondere zur Leibungsverbindung zweier Platten aus Stein, Marmor oder dgl., bestehend aus einem hülsenförmigen Verbindungsstück mit zwei sich gegenüberliegenden und in Bohrungen der zu verbindenden Platten eingreifenden Zapfenteile, die jeweils mit einem in den Platten festsetzbaren Verankerungselement verbindbar sind, **dadurch gekennzeichnet,** daß wenigstens eines der beiden Verankerungselemente (4, 5) ein Konusbolzen (6) ist, dessen Bolzenteil mit einem in eine entsprechende Hinterschneidung (15) des geschlitzten Zapfenteils (2, 3) eingreifenden Bund (9) versehen ist, und daß mit der Stirnseite des Zapfenteils (2, 3) beim Aufschieben auf den Konusbolzen (6) ein Spreizelement (7) im Bohrloch (13) der Platte (14, 18) verspannt wird.

2. Doppelverbinder nach Anspruch 1, **dadurch gekennzeichnet,** daß das Spreizelement (7) ein wellenförmig gebogener Ring ist, der auf dem Konus (8) des Bolzens (6) in eine Hinterschneidung (12) der Plattenbohrung (13) eingedrückt wird.

3. Doppelverbinder nach Anspruch 1, **dadurch gekennzeichnet,** daß der am Konusbolzen (6) angeordnete Bund (9) in Schieberichtung eine Auflauffase (11) aufweist.

4. Doppelverbinder nach Anspruch 1, **dadurch gekennzeichnet,** daß eines der beiden Zapfenteile (2a) ein auf ein entsprechendes Außengewinde (20) des Konusbolzens (6a) aufschraubbares Innengewinde (19) aufweist.

5. Doppelverbinder nach Anspruch 4, **dadurch gekennzeichnet,** daß der Anschlagbund (17) zwischen den beiden Zapfenteilen (2a, 3) als Mehrkant ausgebildet ist.

## Claims

1. Double connector, especially for the concealed connection of two slabs of stone, marble or the like, consisting of a sleeve-like connecting piece with two stud parts which lie opposite each other and engage in drilled holes in the slabs to be connected, and each of which can be connected to an anchoring element that can be fixed in the slabs, characterised in that at least one of the two anchoring elements (4, 5) is a cone/bolt member (6), the bolt part of which is provided with a collar (9) engaging in a corresponding undercut (15) of the slotted stud part (2, 3), and that, by means of the end face of the stud part (2, 3), on being pushed onto the cone/bolt member (6), an expansion element (7) is braced in the drilled hole (13) in the slab (14, 18).

2. Double connector according to Claim 1, characterised in that the expansion element (7) is a wave-shaped ring which, on the cone (8) of the bolt (6) is pressed into an undercut (12) of the drilled hole (13) in the slab.

3. Double connector according to Claim 1, characterised in that the collar (9) arranged on the cone/bolt member (6) has in the pushing direction a run-on chamfer (11).

4. Double connector according to Claim 1, characterised in that one of the two stud parts (2a) has an internal thread (19) that can be screwed onto a corresponding external thread (20) of the cone/bolt member (6a).

5. Double connector according to Claim 4, characterised in that the stop collar (17) between the two stud parts (2a, 3) is polygonal.

## Revendications

1. Système à double effet de liaison, notamment pour la solidarisation par embrasure de deux panneaux en pierre, en marbre ou en un matériau similaire, constitué d'une pièce de solidarisation en forme de douille munie de deux parties de chevillage situées en vis-à-vis, pénétrant dans des trous forés dans les panneaux à solidariser, et pouvant être respectivement reliées à un élément d'ancrage pouvant être bloqué à demeure dans les panneaux, caractérisé par le fait qu'au moins l'un des deux éléments d'ancrage (4, 5) est un tenon tronconique (6) dont le fut est pourvu d'un collet (9) s'engageant dans une contre-dépouille correspondante (15) de la partie de chevillage (2, 3) fendue ; et par le fait que, lors de l'enfilement sur le tenon tronconique (6), un élément déployable (7) est bloqué, avec la face extrême de la partie de chevillage (2, 3), dans le trou (13) foré dans le panneau (14, 18).

2. Système à double effet de liaison, selon la revendication 1, caractérisé par le fait que l'élément déployable (7) est un anneau à cintrages ondulés qui est enfoncé, sur le cône (8) du tenon (6), dans une contre-dépouille (12) du trou (13) foré dans le panneau.

3. Système à double effet de liaison, selon la revendication 1, caractérisé par le fait que le collet (9), disposé sur le tenon tronconique (6), comporte un biseau d'attaque (11) dans la direction du coulissement.

4. Système à double effet de liaison, selon la revendication 1, caractérisé par le fait que l'une (2a) des deux parties de chevillage comporte un filetage intérieur (19), pouvant être vissé sur un filetage extérieur correspondant (20) du tenon tronconique (6a).

5. Système à double effet de liaison, selon la revendication 4, caractérisé par le fait que la collerette de butée (17) est réalisée sous la forme d'un écrou polygonal entre les deux parties de chevillage (2a, 3).
